(19) **Europäisches Patentamt / European Patent Office / Office européen des brevets**

(11) **EP 4 703 036 A1**

(12) **EUROPEAN PATENT APPLICATION**
published in accordance with Art. 153(4) EPC

(43) Date of publication:
**04.03.2026 Bulletin 2026/10**

(21) Application number: **23935050.7**

(22) Date of filing: **23.11.2023**

(51) International Patent Classification (IPC):
***B01J 23/78*** *(2006.01)*

(52) Cooperative Patent Classification (CPC):
Y02P 20/52

(86) International application number:
**PCT/CN2023/133691**

(87) International publication number:
**WO 2024/221882 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2023 CN 202310462129**

(71) Applicants:
• **China Energy Investment Corporation Limited
  Beijing 100011 (CN)**
• **National Institute of Clean-and-Low-Carbon Energy
  Beijing 102209 (CN)**

(72) Inventors:
  • **LIN, Quan
    Beijing 102211 (CN)**
  • **ZHANG, Kui
    Beijing 102211 (CN)**
  • **CHENG, Meng
    Beijing 102211 (CN)**
  • **LI, Weizhen
    Beijing 102211 (CN)**
  • **CHANG, Hai
    Beijing 102211 (CN)**
  • **WANG, Tao
    Beijing 102211 (CN)**
  • **ZHANG, Xiaoyu
    Beijing 102211 (CN)**
  • **ZHANG, Xuebing
    Beijing 102211 (CN)**
  • **LV, Yijun
    Beijing 102211 (CN)**
  • **MEN, Zhuowu
    Beijing 102211 (CN)**

(74) Representative: **Kador & Partner Part mbB
    Corneliusstraße 15
    80469 München (DE)**

(54) **FISCHER-TROPSCH SYNTHESIS IRON-BASED CATALYST AND PREPARATION METHOD THEREFOR**

(57) The present invention provides an iron-based catalyst for Fischer-Tropsch synthesis, comprising Fe, Cu, K, and $SiO_2$, wherein the iron-based catalyst's surface contains 0.3 mol% to 3 mol% of Ba. The present invention further provides a method for preparing the iron-based catalyst for Fischer-Tropsch synthesis. The iron-based catalyst for Fischer-Tropsch synthesis provided by the present invention features a simple and convenient prepare process, excellent catalytic perfor-mance and good heat resistance. It exhibits resistance deactivation during prolonged use, thereby significantly improving the production efficiency of a Fischer-Tropsch synthesis process, reducing production costs, and pos-sessing substantial economic and social value.

EP 4 703 036 A1

**Description**

TECHNICAL FIELD

The present invention relates to the field of Fischer-Tropsch synthesis, specifically to an iron-based catalyst for Fischer-Tropsch synthesis and a preparation method therefor.

BACKGROUND

The Fischer-Tropsch synthesis reaction enable the synthesis of hydrocarbon compounds with different carbon numbers through CO and $H_2$ under suitable temperatures, pressures, and catalyst conditions. The resultant products can undergo further processing to obtain fuels and chemicals. Thus, Fischer-Tropsch synthesis enables energy conversion through Gas-To-Liquid (GTL) processes using feedstocks, such as coal, natural gas, and biomass, etc. The Fischer-Tropsch synthesis is further categorized into high-temperature Fischer-Tropsch synthesis (HTFT) and low-temperature Fischer-Tropsch synthesis (LTFT). HTFT operates at a reaction temperature of greater than 300°C, typically utilizing fluidized bed reactors and fused iron catalysts, with its primary products being olefins and oxygenates. In contrast, LTFT operates at a reaction temperature below 280°C, typically employing fixed bed or slurry bed reactors, comprising precipitated iron catalyst (suitable for a reaction temperature of 250 to 280 °C) or supported cobalt catalyst (suitable for a reaction temperature of 200 to 230°C), with its primary products being diesel and wax. Cobalt-based catalysts and iron-based catalysts differ in compositions and preparation methods due to their different active phase structures and the primary pathways of main and side reactions. Iron-based catalysts, with iron as the active component, are more suitable for large-scale industrial applications due to their advantages, such as low price, strong poison tolerance, and high content of linear alpha olefins in products, etc.

Iron-based catalysts prepared by the precipitation method exhibit small grain sizes and abundant active sites. However, the small grains are susceptible to sintering, and the Fischer-Tropsch synthesis is a highly exothermic reaction, intense exothermic spots form at the active sites of the catalyst. This necessitates catalyst with high thermal stability; otherwise, under the influence of reaction-generated heat, the catalyst may undergo sintering or active particle fragmentation, leading to diminished catalytic performance. Consequently, the development of iron-based catalysts with both high activity and high thermal stability represents a critical research direction for slurry-bed Fischer-Tropsch synthesis technology.

Commonly used approaches to enhance catalyst stability mainly include: (1) incorporating a binder (such as $SiO_2$) to disperse and bond iron grains, (2) optimizing preparation processes (such as heat treatment) to enhance particle strength and inhibit fragmentation; and (3) adding a structure promoter (such as Ti, Zr) to improve particle strength. Among these, incorporating a binder is the most effective approach for improving the mechanical strength of a catalyst. Currently, almost all of the iron-based catalysts for Fischer-Tropsch synthesis contain $SiO_2$ binders. However, while silica functions to space out and bind the active particles of a catalyst to avoid the sintering of active phase of the catalyst, it fails to effectively solve the issue of thermal stability of the catalyst. This is because silica exhibits poor thermal conductivity, and silica spheres tend to aggregate under the combined effects of heat and water vapor, which can readily lead to reduced catalyst strength. Researchers have also sought to enhance mechanical strength of catalyst by introducing structure promoters. For example, Chinese patents CN 1245255C, CN 101293206A and CN 101298046A respectively report improved abrasion resistance of a catalyst by adding zinc, zirconium, and titanium auxiliary agents. These methods, which suppress catalyst fragmentation by increasing the strength of catalyst particles, do not enhance the anti-sintering stability of catalyst under reaction-generated heat, thus cannot prevent activity degradation caused by iron grain sintering. Therefore, improving the thermal stability of iron-based catalysts under reactions remains a pressing challenge for precipitated iron-based catalysts for Fischer-Tropsch synthesis.

Chinese patent CN 107684910B discloses a method for preparing an iron-based catalyst for Fischer-Tropsch synthesis, and the components for preparing the catalyst comprise Fe, Cu, K, Ca, and a metal auxiliary agent which is at least one selected from barium, zinc, lanthanum, magnesium, aluminum, strontium, cerium, lawrencium, platinum, ytterbium, niobium, praseodymium, palladium, and cesium. The patent specifies that a catalyst with high abrasion resistance can be obtained through the following process: first dispersing precipitation reaction product containing iron, calcium and metal auxiliary agents in potassium salt solution for impregnation in the presence of an organic carboxylic acid, followed by spray drying and calcination, and then mixing the primary calcined products with silica sol in the presence of an organic solvent, and performing the secondary spray drying and calcination. However, the preparation procedure proposed in this patent is cumbersome, as it generally requires the addition of multiple auxiliary agents and requires a secondary calcination, resulting in high process costs.

Chinese patent CN 107913714B discloses an iron-based catalyst for Fischer-Tropsch synthesis comprising Fe, Cu, Mn, K, $SiO_2$, a first auxiliary agent, and a second auxiliary agent, wherein the first auxiliary agent is one or more selected from Ca, Sr, and Ba, while the second auxiliary agent is one or more of La, Ce, Y, and Nd. The patent specifies that its technical solution provides a catalyst with high stability and low selectivity toward $CO_2$ and $CH_4$. It emphasizes that, within the composition range defined by the invention, the catalyst can maintain low selectivity toward carbon dioxide and methane at high conversion rates under the synergistic effect of rare earth metals, alkaline earth metals, and other auxiliary agents, while effectively suppress the deactivation of catalyst; if only rare earth metals auxiliary agent or alkaline earth metal auxiliary agent are added individually, the above effects cannot be achieved simultaneously. In addition, in terms of its preparation method, the patent discloses that when the solution of the first auxiliary agent is added via impregnation method, the precipitated catalyst slurry must undergo drying and calcination prior to impregnation, and the impregnated catalyst requires a second drying and calcination, resulting in lengthy preparation steps and high costs.

## SUMMARY OF THE INVENTION

To address the limitation of existing technologies, one objective of the present invention is to provide an iron-based catalyst for Fischer-Tropsch synthesis that exhibits excellent catalytic performance and thermal stability, which is highly suitable for Fischer-Tropsch synthesis reactions and can significantly enhance the reaction efficiency.

Another objective of the present invention is to provide a method for preparing the iron-based catalyst for Fischer-Tropsch synthesis.

A first aspect of the present invention provides an iron-based catalyst for Fischer-Tropsch synthesis comprising Fe (iron element), Cu (copper element), K (potassium element), and silica ($SiO_2$), wherein the surface of the iron-based catalyst contains 0.3 mol% to 3 mol% of Ba (barium element).

Since Ba exhibits good thermal stability and thermal conductivity, the present invention incorporates a specific amount of Ba into the iron-based catalyst for Fischer-Tropsch synthesis, ensuring its uniform dispersion on the surfaces of Fe grains and $SiO_2$ particle without substantially changing the original morphology of the catalyst. The Ba dispersed on the surface does not enter the crystalline phases of Fe or Si, enabling it effectively protect the Fe grains within the catalyst. This prevents both the sintering of Fe grains and the formation of iron silicate species that are generated by the interaction between Fe grains and silica particles and difficult to be reduced. Consequently, the resulting catalyst achieves excellent catalytic activity and thermal stability.

In some preferred embodiments, the surface of the iron-based catalyst for Fischer-Tropsch synthesis may contain 0.5 mol% to 2.8 mol% of Ba, such as about 0.5 mol%, about 0.8 mol%, about 1 mol%, about 1.2 mol%, about 1.5 mol%, about 1.8 mol%, about 2 mol%, about 2.2 mol%, about 2.5 mol%, about 2.8 mol%, or any combination of the foresaid mole percentage ranges. In some more preferred embodiments, the surface of the iron-based catalyst for Fischer-Tropsch synthesis may contain 1 mol% to 2.5 mol% of Ba. In some still preferred embodiments, the surface of the iron-based catalyst for Fischer-Tropsch synthesis may contain 1.5 mol% to 2.5 mol% of Ba.

In the iron-based catalyst for Fischer-Tropsch synthesis provided by the present invention, Ba is present in the form of barium carbonate ($BaCO_3$). Ba itself exhibits a certain degree of alkalinity, which helps suppress the generation of methane ($CH_4$) by-products in the Fischer-Tropsch synthesis reaction, thus enhancing the selectivity toward $C_5$+ products and olefins, while increasing the selectivity toward $CO_2$ at the same time. The inventors have found that when Ba is present in the form of barium carbonate, it can effectively function as an alkaline earth metal auxiliary agent, while it can also address the problem of increased selectivity toward $CO_2$ caused by strongly alkaline auxiliary agents (such as an alkali metal auxiliary agent (potassium auxiliary agent), and Ba in the form of barium hydroxide, etc.). As a result, the resulting catalyst achieves both low selectivity toward $CO_2$ and $CH_4$, further improving its catalytic performance.

In some preferred embodiments, the iron-based catalyst for Fischer-Tropsch synthesis provided by the present invention may have a specific surface area of 100 to 250 $m^2$/g. In some more preferred embodiments, the iron-based catalyst for Fischer-Tropsch synthesis provided by the present invention may have a specific surface area of 120 to 210 $m^2$/g.

In some preferred embodiments, the iron-based catalyst for Fischer-Tropsch synthesis provided by the present invention may comprise the following components in a mass ratio: Fe : Cu : K : Ba : $SiO_2$ = 100 : 0.2~5 : 0.5~8 : 1~10 : 10~40. In some more preferred embodiments, the iron-based catalyst for Fischer-Tropsch synthesis provided by the present invention may comprise the following components in a mass ratio: Fe : Cu : K : Ba: $SiO_2$= 100 : 2~5 : 4~8 : 5~10 : 20~40.

A second aspect of the present invention provides a method for preparing the iron-based catalyst for Fischer-Tropsch synthesis, comprising the following steps:

S1: forming an aqueous mixed solution of a water-soluble iron salt and a water-soluble copper salt, simultaneously preparing a precipitant solution, and adding 0 wt% to 100 wt% of a silicon source to the precipitant solution;

S2: bringing the aqueous mixed solution into contact with the precipitant solution to carry out precipitation reaction, and separating the resulting precipitate after completion of the reaction;

S3: mixing the precipitate with an aqueous solution of a potassium auxiliary agent precursor and the remaining silicon source to form a mixed slurry, and subjecting the mixed slurry to slurrying treatment to obtain a slurry of catalyst precursor; and

S4: drying and calcining the slurry of catalyst precursor;
wherein, Ba is added in the following manners:

adding a water-soluble barium salt to the aqueous mixed solution in step S1, with the barium concentration being less than 2.0 g Ba/100 g water; or
formulating a water-soluble barium salt into an aqueous solution with a concentration of less than 2.0 g Ba/100 g water, which is then added to the mixed slurry in step S3.

In the method provided by the present invention, controlling the concentration of Ba during its addition can ensure that Ba is uniformly distributed on the surface of the catalyst at a specific content, forming extremely fine particles without substantially changing the original morphology of the catalyst.

In the method provided by the present invention, the silicon source may be added entirely or partially to the precipitant solution, or entirely or partially to the mixed slurry. For example, the proportion of the silicon source added to the precipitant solution may account for about 0 wt%, about 10 wt%, about 20 wt%, about 30 wt%, about 40 wt%, about 50 wt%, about 60 wt%, about 70 wt%, about 80 wt%, about 90 wt%, about 100 wt% of the total mass of the silicon source, or it may fall within any range combing the aforesaid mass ratios, with the remaining portion of the silicon source being added to the mixed slurry.

In the method provided by the present invention, the water-soluble iron salt may be any conventional type in the art, including but not limited to iron nitrates, iron chlorides, or their respective hydrates (wherein the number of crystalline water molecules may be any conventional amount in the art), such as $Fe(NO_3)_3 \cdot 9H_2O$. In some preferred embodiments, the concentration of Fe in the aqueous mixed solution may range from 5 to 100 g/L, such as about 5 g/L, about 10 g/L, about 20 g/L, about 30 g/L, about 40 g/L, about 50 g/L, about 60 g/L, about 70 g/L, about 80 g/L, about 90 g/L, about 100 g/L, or any combination of the foresaid concentration ranges.

In the method provided by the present invention, the water-soluble copper salt may be any conventional type in the art, including but not limited to copper nitrates, copper chlorides, or their respective hydrates (wherein the number of crystalline water molecules may be any conventional amount in the art), such as $Cu(NO_3)_2 \cdot 3H_2O$.

In the method provided by the present invention, the precipitant may be any conventional type in the art, including but not limited to one or more of sodium carbonate, aqueous ammonia, ammonium carbonate, sodium hydroxide, potassium hydroxide, and potassium carbonate. In some preferred embodiments, the precipitant in the precipitant solution may have a concentration of 50 to 150 g/L, such as about 50 g/L, about 60 g/L, about 70 g/L, about 80 g/L, about 90 g/L, about 100 g/L, about 110 g/L, about 120 g/L, about 130 g/L, about 140 g/L, about 150 g/L, or any combination of the concentration ranges.

In the method provided by the present invention, the silicon source may be any conventional type in the art, including but not limited to one or more of potassium silicate solution, sodium silicate solution, and silica sol solution, wherein $SiO_2$ may have a concentration of 10 wt% to 50 wt%. In some preferred embodiments, $SiO_2$ in the silicon source may have a concentration of 10 wt% to 30 wt%.

In the method provided by the present invention, the water-soluble barium salt may be one or a combination of barium nitrate and barium hydroxide.

In the method provided by the present invention, the potassium auxiliary agent precursor may be any conventional type in the art, including but not limited to one or more of potassium nitrate, potassium carbonate, potassium bicarbonate, potassium silicate, and potassium chloride.

In the method provided by the present invention, in step S2, the precipitation reaction may be carried out at a temperature of 5 to 95°C, such as about 5°C, about 20°C, about 40°C, about 60°C, about 80°C, about 95°C, or any combination of the temperature ranges. The precipitation time may be 5 to 100 minutes, such as about 5 minutes, about 20 minutes, about 40 minutes, about 60 minutes, about 80 minutes, about 100 minutes, or any combination of the time ranges. Additionally, the pH value during the precipitation may be controlled within a range of 5 to 10, such as about 5, about 6, about 7, about 8, about 9, about 10, or any combination of the pH ranges.

In the method provided by the present invention, in step S3, when forming the mixed slurry, the mixing temperature of the materials may be 20 to 70°C, such as about 20°C, about 30°C, about 40°C, about 50°C, about 60°C, about 70°C, or any combination of the temperature ranges. The mixing time may be 1 to 60 minutes, such as about 5 minutes, about 10 minutes, about 20 minutes, about 30 minutes, about 40 minutes, about 50 minutes, about 60 minutes, or any combination of the time ranges.

In the method provided by the present invention, in step S3, the slurrying temperature for the slurrying treatment may be 10 to 80°C, such as about 10°C, about 20°C, about 30°C, about 40°C, about 50°C, about 60°C, about 70°C, about 80°C, or any combination of the temperature ranges. The slurrying time may be 10 to 80 minutes, such as about 10 minutes, about 20 minutes, about 30 minutes, about 40 minutes, about 50 minutes, about 60 minutes, about 70 minutes, about 80 minutes, or any combination of the time ranges. Additionally, the concentration of the slurry during the slurrying treatment process may be controlled within 10 wt% to 20 wt%.

In the method provided by the present invention, the presence of carbonate ions in the preparation system, such as those in the precipitant and/or the potassium auxiliary agent precursor, facilitates the conversion of Ba into $BaCO_3$. However, if the system contains no carbonate ions, if the carbonate ions in the system are unable to react with barium salt to form $BaCO_3$, or if the amount of carbonate ions is insufficient to fully convert barium element into $BaCO_3$, it is necessary to introduce additional $CO_2$ gas after completion of the slurrying treatment to ensure formation of $BaCO_3$. Even when carbonate ions are present in the system, additional $CO_2$ gas may still be introduced to sufficiently ensure formation of $BaCO_3$. In some preferred embodiments, step S3 further comprises: introducing $CO_2$ gas for a treatment duration of 0 to 180 minutes after completion of slurrying treatment. In some more preferred embodiments, step S3 further comprises: introducing $CO_2$ gas for a treatment duration of 30 to 180 minutes after completion of slurrying treatment. In some other preferred embodiments, the temperature during the $CO_2$ treatment may be the same as that during the slurrying treatment.

In the method provided by the present invention, in step S4, the drying may be carried out as follows: first, the slurry of the catalyst precursor is subject to spray drying, and the resulting powder is then dried in an air atmosphere at 110 to 300°C for 1 to 12 hours. In some preferred embodiments, the hot air inlet temperature used for the spray drying may be 180 to 400°C, and the exhaust air outlet temperature may be 100 to 220°C.

In the method provided by the present invention, in step S4, the calcining may be carried out at a temperature of 400 to 600°C for a duration of 1 to 15 hours. In some preferred embodiments, the catalyst obtained after calcination may be stored in a $CO_2$-containing atmosphere to prevent its deterioration.

The technical solution provided by the present invention has the following advantages:

(1) The surface of the iron-based catalyst for Fischer-Tropsch synthesis provided by the present invention is uniformly distributed with a specific content of Ba element, which can better exert the thermal stability and thermal conductivity of Ba element, thereby effectively preventing Fe sintering and the combination of Fe and $SiO_2$, so that the catalyst can exhibit very excellent catalytic activity and thermal stability.

(2) In the iron-based catalyst for Fischer-Tropsch synthesis provided by the present invention, the Ba element exists in the form of barium carbonate, which enables the catalyst to exhibit low selectivity toward $CO_2$ and $CH_4$ when used in Fischer-Tropsch synthesis reactions.

(3) The preparation process of the iron-based catalyst for Fischer-Tropsch synthesis provided by the present invention is simple, requiring only a small amount of barium salt to be added. The conditions are mild and easily controllable, with no need for secondary calcination. It features strong operability, low cost, and is suitable for large-scale industrial production.

In summary, the iron-based catalyst for Fischer-Tropsch synthesis provided by the present invention features a simple and convenient preparation process, excellent catalytic performance and good heat resistance, and is not prone to deactivation after long-term use. Therefore, the use of said catalyst can significantly enhance the production efficiency of a Fischer-Tropsch synthesis process, reduce production costs, and has very substantial economic and social value.

BRIEF DESCRIPTION OF THE DRAWINGS

Figure 1 shows the XRD patterns of the catalysts prepared in Example 1 and Comparative Example 1, wherein the upper pattern corresponds to the catalyst from Example 1, and lower pattern corresponds to the catalyst from Comparative Example 1.

Figure 2 shows the TEM-EDS spectrograms of the catalyst prepared in Example 1, wherein the left figure shows the distribution of Ba element on the catalyst while the right figure shows the distribution of Fe element on the catalyst.

DETAILED DESCRIPTION OF THE EMBODIMENTS

The technical solution of the present invention will be further described in detail below with reference to specific embodiments.

The testing methods used in the present invention are as follows:

(1) Composition of catalyst components:
The composition of catalyst components is determined using an X-ray fluorescence (XRF) spectrometer.
(2) Specific surface area (BET) of catalyst
The BET specific surface area is calculated using BET model equation based on the $N_2$ adsorption isotherm at 77 K using the static low-temperature nitrogen adsorption method.
(3) Pore volume (PV)

The pore volume corresponds to the value at P/P0=0.98~0.99 on the $N_2$ adsorption isotherm measured at 77 K.

(4) Average pore size (PD):

The average pore size is calculated based on the formula: PD=4*PV/BET.

(5) Content of Ba element on the surface of catalyst:

It is measured using X-ray photoelectron spectroscopy (XPS) analyzer.

Unless otherwise specified, the raw materials or reagents used in the Examples and Comparative Examples of the present invention are commercially available products.

Unless otherwise specified, the percentages used in the Examples and Comparative Examples of the present invention are mass percentages.

**Example 1**

10 kg of $Fe(NO_3)_3 \cdot 9H_2O$, 140 g of $Cu(NO_3)_2 \cdot 3H_2O$, and 260 g of $Ba(NO_3)_2$ were dissolved in deionized water to prepare a 50 L of solution. Separately, 5 kg of ammonium carbonate and 1.84 kg of silica sol solution with a mass concentration of silica of 30% were added to deionized water to prepare a 40 L of precipitant solution. The mixed solution containing iron, copper, and barium was subjected to co-precipitation with the precipitant solution under the following conditions: a precipitation temperature of 30°C, a precipitation time of 60 minutes, and a pH of 9.0. Upon completion of the precipitation reaction, the precipitate slurry was filtered and washed several times to obtain a filter cake of catalyst precursor. 195 g of potassium carbonate was fully dissolved in 1.5 kg of deionized water to prepare an aqueous solution of potassium auxiliary agent precursor. The aqueous solution of potassium auxiliary agent precursor was added to the filter cake of catalyst precursor for slurrying treatment, wherein the mass concentration of the slurry was controlled to 15%, the slurrying temperature was controlled to 25°C, and the slurrying time was controlled to 20 minutes to obtain a slurry of catalyst precursor. Spray drying was performed with an inlet temperature controlled at 380°C and a hot air outlet temperature at 220°C. The spray dried product was collected, dried in an air atmosphere at 120°C for 12 hours, and subsequently calcined in an air atmosphere at 450°C for 5 hours to obtain the finished catalyst, designated as catalyst 1.

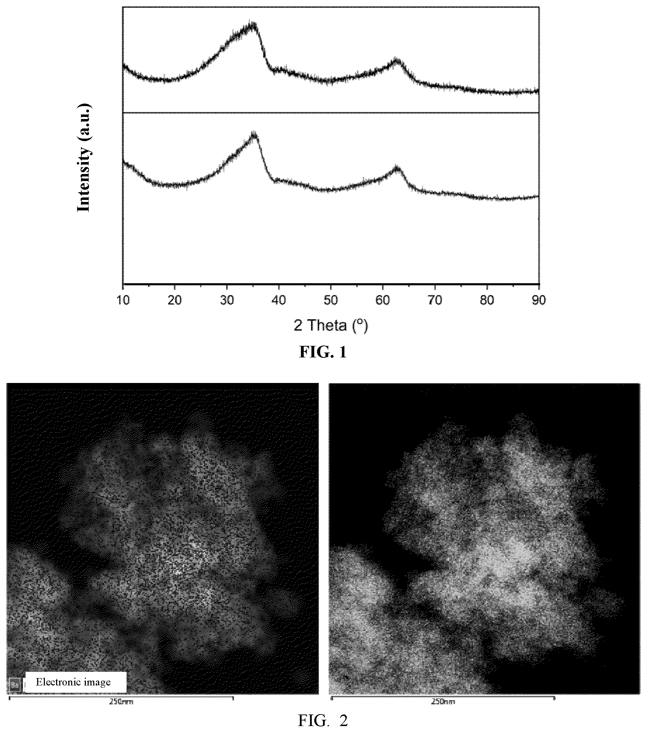

As can be seen from Figure 1, compared with the catalyst containing no Ba component (i.e., the catalyst of Comparative Example 1), the XRD pattern of catalyst 1 with Ba component added still exhibits the conventional catalyst peak profile, indicating that the Ba component is present in a highly dispersed state in the catalyst without forming larger crystalline structures, and thus the morphology of the catalyst remains largely unchanged.

As can be seen from Figure 2 that the Ba component is present in a highly dispersed state in the catalyst with no larger crystalline structures formed.

**Example 2**

10 kg of $Fe(NO_3)_3 \cdot 9H_2O$, 140 g of $Cu(NO_3)_2 \cdot 3H_2O$, and 26 g of $Ba(NO_3)_2$ were dissolved in deionized water to prepare a 50 L of solution. Separately, 4 kg of sodium carbonate and 30 g of silica sol solution with a mass concentration of silica of 20% were added to deionized water to prepare a 40 L of precipitant solution. The mixed solution containing iron, copper, and barium was subjected to co-precipitation with the precipitant solution under the following conditions: a precipitation temperature of 50°C, a precipitation time of 50 minutes, and a pH of 8.5. Upon completion of the precipitation reaction, the precipitate slurry was filtered and washed several times to obtain a filter cake of catalyst precursor. 12 g of potassium carbonate was fully dissolved in 1.5 kg of deionized water to prepare an aqueous solution of potassium auxiliary agent precursor. The aqueous solution of potassium auxiliary agent precursor and 660 g of silica sol solution with a mass concentration of silica of 20% were sequentially added to the filter cake of catalyst precursor for slurrying treatment, wherein the mass concentration of the slurry was controlled to 15%, the slurrying temperature was controlled to 30°C, and the slurrying time was controlled to 30 minutes to obtain a slurry of catalyst precursor. Spray drying was performed with a inlet temperature controlled at 350°C and a hot air outlet temperature controlled at 160°C. The spray dried product was collected, and dried in an air atmosphere at 150°C for 10 hours, and subsequently calcined in an air atmosphere at 400°C for 15 hours to obtain the finished catalyst, designated as catalyst 2.

**Example 3**

10 kg of $Fe(NO_3)_3 \cdot 9H_2O$, and 260 g of $Cu(NO_3)_2 \cdot 3H_2O$ were dissolved in deionized water to prepare a 50 L of solution. Separately, 8 kg of aqueous ammonia with a mass concentration of 25% and 140 g of potassium silicate solution with a modulus of 1 and a mass concentration of silica of 20% were added to deionized water to prepare a 40 L of precipitant solution. The mixed solution containing iron and copper was subjected to co-precipitation with the precipitant solution under the following conditions: a precipitation temperature of 70°C, a precipitation time of 30 minutes, and a pH controlled to 5.0. Upon completion of the precipitation reaction, the precipitate slurry was filtered and washed several times to obtain a filter cake of catalyst precursor. 104 g of potassium carbonate and 28 g of $Ba(OH)_2$ were fully dissolved in 1.5 kg of deionized water to prepare an aqueous solution of potassium auxiliary agent precursor and barium auxiliary agent. 2.63 kg of silica sol solution with a mass concentration of silica of 20%, followed by the aqueous solutions of barium auxiliary agent and potassium auxiliary agent precursor, were sequentially added to the filter cake of catalyst precursor for slurrying treatment. The mass concentration of the slurry was controlled to 15%, the slurrying temperature was controlled to 50°C, and the slurrying time was controlled to 40 minutes. Upon completion of slurrying, $CO_2$ gas was uniformly introduced into the slurry for the treatment of 120 minutes to obtain a slurry of catalyst precursor. Spray drying was performed with an inlet temperature controlled at 320°C and a hot air outlet temperature controlled at 140°C. The spray dried product was collected, and dried in an air atmosphere at 180°C for 8 hours, and subsequently calcined in an air atmosphere at 600°C for 6 hours to obtain the finished catalyst, designated as catalyst 3.

**Example 4**

10 kg of $Fe(NO_3)_3 \cdot 9H_2O$ and 10 g of $Cu(NO_3)_2 \cdot 3H_2O$ were dissolved in deionized water to prepare a 50 L of solution. Separately, 12 kg of aqueous ammonia with a mass concentration of 25% was added to deionized water to prepare a 40 L of precipitant solution. The mixed solution containing iron and copper was subjected to co-precipitation with the precipitant solution under the following conditions: a precipitation temperature of 90°C, a precipitation time of 20 minutes, and an endpoint pH of 6.0. Upon completion of the precipitation reaction, the precipitate slurry was filtered and washed several times to obtain a filter cake of catalyst precursor. The filter cake of catalyst precursor was added to 1.5 kg of deionized water for slurrying, and 460 g of potassium silicate solution with a modulus of 1 and a content of silica of 30% was fully dissolved in 1.0 kg of deionized water to prepare an aqueous solution of silicon auxiliary agent precursor. The aqueous solution of silicon auxiliary agent precursor was added to the filter cake slurry of catalyst precursor, and mixed thoroughly, and then 5 wt% of nitric acid solution was added to the slurry to adjust the endpoint pH to 7.0, and the above slurry was filtered to obtain a filter cake. 104 g of potassium carbonate and 260 g of $Ba(NO_3)_2$ were fully dissolved into 7 kg of deionized water to prepare aqueous solutions of potassium auxiliary agent and barium auxiliary agent, which were added to the filter cake for slurrying treatment, wherein the mass concentration of the slurry was controlled to 15%, the slurrying temperature was controlled to 70°C, and the slurrying time was controlled to 50 minutes. After completion of the slurrying, $CO_2$ gas was uniformly introduced into the slurry solution and treated for 150 minutes to obtain a slurry of catalyst precursor. Spray drying was performed with an inlet temperature controlled at 290°C and a hot air outlet temperature controlled at 120°C. The spray dried product was collected, and dried in an air atmosphere at 200°C for 6 hours, and subsequently calcined in an air atmosphere at 600°C for 8 hours to obtain the finished catalyst, designated as catalyst 4.

**Example 5**

10 kg of $Fe(NO_3)_3 \cdot 9H_2O$, 260 g of $Cu(NO_3)_2 \cdot 3H_2O$, and 260 g of $Ba(NO_3)_2$ were dissolved in deionized water to prepare a 50 L of solution. Separately, 3.5 kg of sodium carbonate and 1.73 kg of sodium silicate solution with a modulus of 1 and a mass concentration of silica of 20% were added to deionized water to prepare a 40 L of precipitant solution. The mixed solution containing iron, copper and barium was subjected to co-precipitation with the precipitant solution under the following conditions: a precipitation temperature of 10°C, a precipitation time of 90 minutes, and an endpoint pH of 7.0. Upon completion of the precipitation reaction, the precipitate slurry was filtered and washed several times to obtain a filter cake of catalyst precursor. 12 g of potassium carbonate was fully dissolved in 1.5 kg of deionized water to prepare an aqueous solution of potassium auxiliary agent precursor. The aqueous solution of potassium auxiliary agent precursor was added to the filter cake of catalyst precursor for slurrying treatment, wherein the mass concentration of the slurry was controlled to 15%, the slurrying temperature was controlled to 10°C, and the slurrying time was controlled to 60 minutes to obtain a slurry of catalyst precursor. Spray drying was performed with an inlet temperature controlled at 260°C and a hot air outlet temperature controlled at 110°C. The spray dried product was collected, and dried in an air atmosphere at 220°C for 4 hours, and subsequently calcined in an air atmosphere at 550°C for 10 hours to obtain the finished catalyst, designated as catalyst 5.

**Example 6**

10 kg of $Fe(NO_3)_3 \cdot 9H_2O$, 10 g of $Cu(NO_3)_2 \cdot 3H_2O$, and 26 g of $Ba(NO_3)_2$ were dissolved in deionized water to prepare a 50 L of solution. Separately, 4.5 kg of ammonium carbonate and 120 g of sodium silicate solution with a modulus of 3.5 and a mass concentration of silica of 30% were added to deionized water to prepare a 40 L of precipitant solution. The mixed solution containing iron, copper and barium was subjected to co-precipitation with the precipitant solution under the following conditions: a precipitation temperature of 30°C, a precipitation time of 30 minutes, and an endpoint pH of 8.5. Upon completion of the precipitation reaction, the precipitate slurry was filtered and washed several times to obtain a filter cake of catalyst precursor. 195 g of potassium carbonate was fully dissolved in 1.5 kg of deionized water to prepare an aqueous solution of potassium auxiliary agent precursor. The aqueous solution of potassium auxiliary agent precursor and 1.04 kg of silica sol solution with a mass concentration of silica of 30% were added to the filter cake of catalyst precursor for slurrying treatment, wherein the mass concentration of the slurry was controlled to 15%, the slurrying temperature was controlled to 25°C, and the slurrying time was controlled to 20 minutes to obtain the slurry of catalyst precursor. Spray drying was performed with an inlet temperature controlled at 230°C and a hot air outlet temperature controlled at 105°C. The spray dried product was collected, and dried in an air atmosphere at 250°C for 3 hours, and subsequently calcined in an air atmosphere at 400°C for 12 hours to obtain the finished catalyst, designated as catalyst 6.

**Example 7**

10 kg of $Fe(NO_3)_3 \cdot 9H_2O$, and 260 g of $Cu(NO_3)_2 \cdot 3H_2O$ were dissolved in deionized water to prepare a 50 L of solution. Separately, 8 kg of aqueous ammonia with a mass concentration of 25% and 690 g of potassium silicate solution with a modulus of 3.5 and a mass concentration of silica of 20% were added to deionized water to prepare a 40 L of precipitant solution. The mixed solution containing iron and copper was subjected to co-precipitation with the precipitant solution under the following conditions: a precipitation temperature of 50°C, a precipitation time of 60 minutes, and an endpoint pH of 5.0. Upon completion of the precipitation reaction, the precipitate slurry was filtered and washed several times to obtain a filter cake of catalyst precursor. 105 g of $Ba(OH)_2$ was fully dissolved in 7 kg of deionized water to prepare an aqueous solution of barium auxiliary agent. 195 g of potassium carbonate was fully dissolved in 1.0 kg of deionized water to prepare an aqueous solution of potassium auxiliary agent precursor. An aqueous solution of barium auxiliary agent and an aqueous solution of potassium auxiliary agent precursor was successively added to the filter cake of catalyst precursor for slurrying treatment, wherein the mass concentration of the slurry was controlled to 15%, the slurrying temperature was controlled to 30°C, and the slurrying time was controlled to 30 minutes. After completion of the slurrying, $CO_2$ gas was uniformly introduced into the slurry for the treatment of 180 minutes to obtain the slurry of catalyst precursor. Spray drying was performed with an inlet temperature controlled at 200°C and a outlet hot air temperature controlled at 105°C. The spray dried product was collected, and dried in an air atmosphere at 280°C for 2 hours, and then calcined in an air atmosphere at 500°C for 8 hours to obtain the finished catalyst, designated as catalyst 7.

**Example 8**

10 kg of $Fe(NO_3)_3 \cdot 9H_2O$ and 10 g of $Cu(NO_3)_2 \cdot 3H_2O$ were dissolved in deionized water to prepare a 50 L of solution. Separately, 9 kg of aqueous ammonia with a mass concentration of 25% and 2.76 kg of sodium silicate solution with a modulus of 1 and a mass concentration of silica of 20% were added to deionized water to prepare a 40 L of precipitant solution. The precipitant solution was subjected to co-precipitation with the mixed solution containing iron and copper under the following conditions: a precipitation temperature of 70°C, a precipitation time of 40 minutes, and an endpoint pH of 6.0. Upon completion of the precipitation reaction, the precipitate slurry was filtered and washed several times to obtain a filter cake of catalyst precursor. 160 g of $Ba(NO_3)$ was fully dissolved in 7 kg of deionized water to prepare an aqueous solution of barium auxiliary agent. 12 g of potassium carbonate was fully dissolved in 1.0 kg of deionized water to prepare an aqueous solution of potassium auxiliary agent precursor. An aqueous solution of barium auxiliary agent and an aqueous solution of potassium auxiliary agent precursor were successively added to the filter cake of catalyst precursor for slurrying treatment, wherein the mass concentration of the slurry was controlled to 15%, the slurrying temperature was controlled to 50°C, and the slurrying time was controlled to 40 minutes. After completion of the slurrying, $CO_2$ gas was uniformly introduced into the slurry for the treatment of 100 minutes to obtain the slurry of catalyst precursor. Spray drying was performed with an inlet temperature controlled at 180°C and a hot air outlet temperature controlled at 100°C. The spray dried product was collected, and dried in an air atmosphere at 300°C for 1 hour, and then calcined in an air atmosphere at 550°C for 8 hours to obtain the finished catalyst, designated as catalyst 8.

**Example 9**

10 kg of $Fe(NO_3)_3 \cdot 9H_2O$, 140 g of $Cu(NO_3)_2 \cdot 3H_2O$ and 160 g of $Ba(NO_3)_2$ were dissolved in deionized water to prepare a 50 L of solution. Separately, 3 kg of sodium carbonate and 1.73 kg of sodium silicate solution with a modulus of 3.5 and a mass concentration of silica of 20% were added to deionized water to prepare a 40 L of precipitant solution. The mixed solution containing iron, copper, and barium was subjected to co-precipitation with the precipitant solution under the following conditions: a precipitation temperature of 30°C, a precipitation time of 80 minutes, and a pH of 7.0. Upon completion of the precipitation reaction, the precipitate slurry was filtered and washed several times to obtain a filter cake of catalyst precursor. 150 g of potassium nitrate was fully dissolved in 1.5 kg of deionized water to prepare an aqueous solution of potassium auxiliary agent precursor. The aqueous solution of potassium auxiliary agent precursor was added to the filter cake of catalyst precursor for slurrying treatment, wherein the mass concentration of the slurry was controlled to 15%, the slurrying temperature was controlled to 25°C, and the slurrying time was controlled to 50 minutes to obtain a slurry of catalyst precursor. Spray drying was performed with an inlet temperature controlled at 380°C and a hot air outlet temperature controlled at 220°C. The spray dried product was collected, and dried in an air atmosphere at 120°C for 12 hours, and then calcined in an air atmosphere at 600°C for 10 hours to obtain the finished catalyst, designated as catalyst 9.

**Example 10**

10 kg of $Fe(NO_3)_3 \cdot 9H_2O$, 10 g of $Cu(NO_3)_2 \cdot 3H_2O$ and 26 g of $Ba(NO_3)_2$ were dissolved in deionized water to prepare a 50 L of solution. Separately, 4.5 kg of ammonium carbonate and 460 g of sodium silicate solution with a modulus of 1 and a mass concentration of silica of 30% were added to deionized water to prepare a 40 L of precipitant solution. The precipitant solution was subjected to co-precipitation with the mixed solution containing iron, copper, and barium under the following conditions: a precipitation temperature of 50°C, the precipitation time of 50 minutes, and an endpoint pH of 8.5. Upon completion of the precipitation reaction, the precipitate slurry was filtered and washed several times to obtain a filter cake of catalyst precursor. 20 g of potassium nitrate was fully dissolved in 1.5 kg of deionized water to prepare an aqueous solution of potassium auxiliary agent precursor. The aqueous solution of potassium auxiliary agent precursor was added to the filter cake of catalyst precursor for slurrying treatment, wherein the mass concentration of the slurry was controlled to 15%, the slurrying temperature was controlled to 30°C, and the slurrying time was controlled to 60 minutes to obtain a slurry of catalyst precursor. Spray drying was performed with an inlet temperature controlled at 350°C and a hot air outlet temperature controlled at 150°C. The spray dried product was collected, and dried in an air atmosphere at 150°C for 10 hours, and then calcined in an air atmosphere at 400°C for 9 hours to obtain the finished catalyst, designated as catalyst 10.

**Example 11**

10 kg of $Fe(NO_3)_3 \cdot 9H_2O$ and 260 g of $Cu(NO_3)_2 \cdot 3H_2O$ were dissolved in deionized water to prepare a 50 L of solution. Separately, 8 kg of aqueous ammonia with a mass concentration of 25% was added to deionized water to prepare a 40 L of precipitant solution. The precipitant solution was subjected to co-precipitation with the mixed solution containing iron and copper under the following conditions: a precipitation temperature of 90°C, a precipitation time of 20 minutes, and an endpoint pH of 5.0. Upon completion of the precipitation reaction, the precipitate slurry was filtered and washed several times to obtain a filter cake of catalyst precursor. 170 g of $Ba(OH)_2$ was fully dissolved in 7 kg of deionized water to prepare an aqueous solution of barium auxiliary agent. 290 g of potassium nitrate was fully dissolved in 0.5 kg of deionized water to prepare an aqueous solution of potassium auxiliary agent precursor. An aqueous solution of barium auxiliary agent, an aqueous solution of potassium auxiliary agent precursor and 1.84 kg of silica sol solution with a mass concentration of silica of 30% were successively added to the filter cake of catalyst precursor for slurrying treatment, wherein the mass concentration of the slurry was controlled to 15%, the slurrying temperature was controlled to 70°C, and the slurrying time was controlled to 20 minutes. After completion of the slurrying, $CO_2$ gas was uniformly introduced into the slurry for the treatment of 130 minutes to obtain a slurry of catalyst precursor. Spray drying was performed with the inlet temperature controlled at 320°C and the hot air outlet temperature controlled at 130°C. The spray dried product was collected, and dried in an air atmosphere at 180°C for 8 hours, and then calcined in an air atmosphere at 600°C for 4 hours to obtain the finished catalyst, designated as catalyst 11.

**Example 12**

10 kg of $Fe(NO_3)_3 \cdot 9H_2O$ and 140 g of $Cu(NO_3)_2 \cdot 3H_2O$ were dissolved in deionized water to prepare a 50 L of solution. Separately, 9 kg of aqueous ammonia with a mass concentration of 25% and 630 g of potassium silicate solution with a modulus of 3.5 and a mass concentration of silica of 30% were added to deionized water to prepare a 40 L of precipitant solution. The mixed solution containing iron and copper was subjected to co-precipitation with the precipitant solution under the following conditions: a precipitation temperature of 90°C, a precipitation time of 20 minutes, and a pH of 6.0. Upon completion of the precipitation reaction, the precipitate slurry was filtered and washed several times to obtain a filter cake of catalyst precursor. 26 g of $Ba(NO)_3$ was fully dissolved in 1.5 kg of deionized water to prepare an aqueous solution of barium auxiliary agent. An aqueous solution of barium auxiliary agent and 530 g of potassium silicate solution with a modulus of 3.5 and a mass concentration of silica of 30% were successively added to the filter cake of catalyst precursor for slurrying treatment, wherein the mass concentration of the slurry was controlled to 15%, the slurrying temperature was controlled to 70°C, and the slurrying time was controlled to 30 minutes. After completion of the slurrying, $CO_2$ gas was uniformly introduced into the slurry for the treatment of 80 minutes to obtain a slurry of catalyst precursor. Spray drying was performed with an inlet temperature controlled at 290°C and a hot air outlet temperature controlled at 120°C. The spray dried products were collected, and dried in an air atmosphere at 200°C for 6 hours, and then calcined in an air atmosphere at 600°C for 4 hours to obtain the finished catalyst, designated as catalyst 12.

### Example 13

10 kg of $Fe(NO_3)_3 \cdot 9H_2O$, 140 g of $Cu(NO_3)_2 \cdot 3H_2O$, and 260 g of $Ba(NO_3)_2$ were dissolved in deionized water to prepare a 50 L of solution. Separately, 3 kg of sodium carbonate and 750 g of silica sol solution with a mass concentration of silica of 25% were added to deionized water to prepare a 40 L of precipitant solution. The precipitant solution was subjected to co-precipitation with the mixed solution containing iron, copper, and barium under the following conditions: a precipitation temperature of 70°C, a precipitation time of 30 minutes, and an endpoint pH of 7.0. Upon completion of the precipitation reaction, the precipitate slurry was filtered and washed several times to obtain a filter cake of catalyst precursor. 630 g of potassium silicate solution with a modulus of 3.5 and a mass concentration of silica of 25% was fully dissolved in 1.0 kg of deionized water to prepare an aqueous solution of potassium auxiliary agent precursor. The aqueous solution of potassium auxiliary agent precursor was added to the filter cake of catalyst precursor for slurrying treatment, wherein the mass concentration of the slurry was controlled to 15%, the slurrying temperature was controlled to 50°C, and the slurrying time was controlled to 40 minutes to obtain a slurry of catalyst precursor. Spray drying was performed with an inlet temperature controlled at 260°C and a hot air outlet temperature controlled at 110°C. The spray dried product was collected, and dried in an air atmosphere at 220°C for 4 hours, and then calcined in an air atmosphere at 450°C for 6 hours to obtain the finished catalyst, designated as catalyst 13.

### Example 14

10 kg of $Fe(NO_3)_3 \cdot 9H_2O$, 30 g of $Cu(NO_3)_2 \cdot 3H_2O$ and 130 g of $Ba(NO_3)_2$ were dissolved in deionized water to prepare a 50 L of solution. Separately, 4.5 kg of ammonium carbonate was added to deionized water to prepare a 40 L of precipitant solution. The mixed solution containing iron, copper, and barium was subjected to co-precipitation with the precipitant solution under the following conditions: a precipitation temperature of 30°C, a precipitation time of 70 minutes, and a pH of 8.5. Upon completion of the precipitation reaction, the precipitate slurry was filtered and washed several times to obtain a filter cake of catalyst precursor. 580 g of potassium silicate solution with a modulus of 3.5 and a mass concentration of silica of 25% was fully dissolved in 0.5 kg of deionized water to prepare an aqueous solution of potassium auxiliary agent precursor. The aqueous solution of potassium auxiliary agent precursor and 1.08 kg of silica sol solution with a mass concentration of silica of 25% were successively added to the filter cake of catalyst precursor for slurrying treatment, wherein the mass concentration of the slurry was controlled to 15%, the slurrying temperature was controlled to 25°C, and the slurrying time was controlled to 50 minutes to obtain a slurry of catalyst precursor. Spray drying was performed with an inlet temperature controlled at 230°C and a hot air outlet temperature controlled at 105°C. The spray dried product was collected, and dried in an air atmosphere at 250°C for 3 hours, and then calcined in an air atmosphere at 550°C for 6 hours to obtain the finished catalyst, designated as catalyst 14.

### Example 15

10 kg of $Fe(NO_3)_3 \cdot 9H_2O$, and 70 g of $Cu(NO_3)_2 \cdot 3H_2O$ were dissolved in deionized water to prepare a 50 L of solution. Separately, and 8 kg of aqueous ammonia with a mass concentration of 25% and 770 g of sodium silicate solution with a modulus of 3.5 and a mass concentration of silica of 25% were added to deionized water to prepare a 40 L of precipitant solution. The mixed solution containing iron and copper was subjected to co-precipitation with the precipitant solution under the following conditions: a precipitation temperature of 50°C, a precipitation time of 40 minutes, and a pH of 5.0. Upon completion of the precipitation reaction, the precipitate slurry was filtered and washed several times to obtain a filter cake of catalyst precursor. 85 g of $Ba(OH)_2$ was fully dissolved in 7 kg of deionized water to prepare an aqueous solution of barium auxiliary agent. 110 g of potassium nitrate was fully dissolved in 0.5 kg of deionized water to prepare an aqueous solution of potassium auxiliary agent precursor. An aqueous solution of barium auxiliary agent and an aqueous solution of potassium auxiliary agent precursor were successively added to the filter cake of catalyst precursor for slurrying treatment, wherein the mass concentration of the slurry was controlled to 15%, the slurrying temperature was controlled to 30°C, and the slurrying time was controlled to 60 minutes. After completion of the slurrying, $CO_2$ gas was uniformly introduced into the slurry for the treatment of 100 minutes to obtain a slurry of catalyst precursor. Spray drying was performed with an inlet temperature controlled at 200°C and a hot air outlet temperature controlled at 100°C. The spray dried product was collected, and dried in an air atmosphere at 280°C for 2 hours, and then calcined in an air atmosphere at 550°C for 4 hours to obtain the finished catalyst, designated as catalyst 15.

### Example 16

10 kg of $Fe(NO_3)_3 \cdot 9H_2O$, and 180 g of $Cu(NO_3)_2 \cdot 3H_2O$ were dissolved in deionized water to prepare a 50 L of solution. Separately, 9 kg of aqueous ammonia with a mass concentration of 25% and 550 g of sodium silicate solution with a modulus of 3.5 and a mass concentration of silica of 25% were added to deionized water to prepare a 40 L of precipitant solution. The mixed solution containing iron and copper was subjected to co-precipitation with the precipitant solution under the following conditions: a precipitation temperature of 10°C, a precipitation time of 90 minutes, and a pH of 6.0. Upon completion of the precipitation reaction, the precipitate slurry was filtered and washed several times to obtain a filter cake of catalyst precursor. 138 g of $Ba(OH)_2$ was thoroughly dissolved in 7 kg of deionized water to prepare an aqueous solution of barium auxiliary agent. 210 g of potassium nitrate was thoroughly dissolved in 0.5 kg of deionized water to prepare an aqueous solution of potassium auxiliary agent precursor. An aqueous solution of barium auxiliary agent, an aqueous solution of potassium auxiliary agent precursor and 550 g of silica sol solution with a mass concentration of silica of 25% were successively added to the filter cake of catalyst precursor for slurrying treatment, wherein the mass concentration of the slurry was controlled to 15%, the slurrying temperature was controlled to 10°C, and the slurrying time was controlled to 60 minutes. After completion of the slurrying, $CO_2$ gas was uniformly introduced into the slurry for the treatment of 100 minutes to obtain a slurry of catalyst precursor. Spray drying was performed with an inlet temperature controlled at 180°C and a hot air outlet temperature controlled at 100°C. The spray dried product was collected, and dried in an air atmosphere at 300°C for 1 hour, and then calcined in an air atmosphere at 600°C for 2 hours to obtain the finished catalyst, designated as catalyst 16.

**Comparative Example 1**

Comparative Example 1 was carried out in the same manner as Example 1, except that no $Ba(NO_3)_2$ was added, and the finished catalyst thus obtained was designated as comparative catalyst 1.

**Comparative Example 2**

Comparative Example 2 was carried out in the same manner as Example 2, except that no $Ba(NO_3)_2$ was added, and the finished catalyst thus obtained was designated as comparative catalyst 2.

**Comparative Example 3**

Comparative Example 3 was carried out in the same manner as Example 3, except that no $Ba(NO_3)_2$ was added, only 104 g of potassium carbonate was fully dissolved into 1.0 kg of deionized water to prepare an aqueous solution of potassium auxiliary agent precursor, and no $CO_2$ treatment was carried out, and the finished catalyst thus obtained was designated as comparative catalyst 3.

**Comparative Example 4**

Comparative Example 4 was carried out in the same manner as Example 4, except that 260 g of $Ba(NO_3)_2$ was replaced with 815 g of $Ca(NO_3)_2 \cdot 4H_2O$, and the finished catalyst thus obtained was designated as comparative catalyst 4.

**Comparative Example 5**

Comparative Example 5 was carried out in the same manner as Example 5, except that 260 g of $Ba(NO_3)_2$ was replaced with 1458 g of $Mg(NO_3)_2 \cdot 6H_2O$, and the finished catalyst thus obtained was designated as comparative catalyst 5.

**Comparative Example 6**

Comparative Example 6 was carried out in the same manner as Example 6, except that 26 g of $Ba(NO_3)_2$ was replaced with 33.5 g of $Sr(NO_3)_2$, and the finished catalyst thus obtained was designated as comparative catalyst 6.

**Comparative Example 7**

Comparative Example 7 was carried out in the same manner as Example 7, except that 300 g of $Ba(NO_3)_2$ was fully dissolved in 7 kg of deionized water to prepare an aqueous solution of barium auxiliary agent, and the finished catalyst thus obtained was designated as comparative catalyst 7.

**Comparative Example 8**

Comparative Example 8 was carried out in the same manner as Example 8, except that 13 g of $Ba(NO_3)_2$ was fully dissolved in 0.5 kg of deionized water to prepare an aqueous solution of barium auxiliary agent, and the finished catalyst thus obtained was designated as comparative catalyst 8.

**Comparative Example 9**

A catalyst was prepared according to the Examples of Chinese invention patent CN 107684910B, with the catalyst having a composition of $100Fe : 6Cu : 5K : 2.1Ca : 1.9Ba : 20SiO_2$.

**Comparative Example 10**

A catalyst was prepared according to the Examples of Chinese invention patent CN 107913714B, with the catalyst having a composition of $100Fe : 5.1Cu : 2.9K : 4.3Nd : 1.5Ba : 20.7SiO_2$.

**Comparative Example 11**

Comparative Example 11 was carried out in the same manner as Example 11, except that no $CO_2$ gas was introduced into the slurry for treatment after completion of the slurrying, and the finished catalyst thus obtained was designated as comparative catalyst 11.

Testing Examples

Testing equipment: 1 L stirred tank reactor.

Testing conditions: 10 g of each catalyst prepared in Examples 1 to 16 and Comparative Examples 1 to 11 was mixed with 300 mL of liquid paraffin, respectively. The mixture was placed in a 1 L stirred tank reactor for reduction activation, and then switched to the Fischer-Tropsch synthesis reaction conditions to carry out reaction. The process conditions for reduction activation and Fischer-Tropsch synthesis reaction are as follows:

(1) Reduction activation: Temperature-programmed reduction was performed using a synthesis gas with a $H_2$/CO volume ratio of 20 : 1. The reduction process was carried out in stages: heating from 30 to 200°C for 4 hours, then heating from 200 to 265°C for 10 hours, followed by constant-temperature reduction at 265°C for 24 hours. The space velocity of the synthesis gas was 8000 $h^{-1}$, and the gauge pressure during reduction was 3.0 MPa.

(2) Fischer-Tropsch synthesis: After completion of the reduction, the volume ratio of $H_2$/CO in the synthesis gas was adjusted to 3 : 1, and the system was stabilized for a period of time. This stabilization period continued until the gas phase composition in the reaction tail gas showed no significant change over time, at which point this moment was recorded as reaction point 0.

(3) Data calculation: The molar amount of CO in the feed at the feed port of the stirred tank reactor was measured and analyzed, the molar amounts of CO, $CO_2$, and $CH_4$ in the effluent at the outlet were measured and analyzed. The CO conversion rate (%), $CO_2$ selectivity (%), and $CH_4$ selectivity (%) were calculated using the following formulas, respectively:

CO conversion rate (%) = [(moles of CO in feed - moles of CO in effluent) / moles of CO in feed] $\times$ 100%;

$CO_2$ selectivity (%) = [moles of $CO_2$ in effluent / (moles of CO in feed - moles of CO in effluent)] $\times$ 100%;

and

$CH_4$ selectivity (%) = [moles of $CH_4$ in effluent / (moles of CO in feed $\times$ CO conversion rate (%) $\times$ (1-$CO_2$ selectivity (%))] $\times$ 100%.

The catalyst deactivation rate refers to the rate at which its reaction activity (conversion rate of carbon monoxide) decreases from the plateau period of the reaction to the end of the reaction, expressed in %/h.

The results regarding composition, properties, and reaction performance of the catalysts prepared in Examples 1 to 16 are shown in Table 1, while those of the catalysts prepared in Comparative Examples 1 to 11 are shown in Table 2.

# EP 4 703 036 A1

**Table 1**

| Comp ositions | Fe | Cu | K | SiO$_2$ | Ba | X(CO) | S(CO$_2$) | S(CH$_4$) | Deact ivatio n rate (%/h) | BET (m$^2$/g) | PV (mL/g) | PD (nm) | Proportion of Ba element on surface of catalyst (%) |
|---|---|---|---|---|---|---|---|---|---|---|---|---|---|
| IE1 | 100 | 2.6 | 8 | 40 | 10 | 80 | 15 | 1.3 | 0.007 | 183 | 0.8 | 18 | 2.9 |
| IE2 | 100 | 2.6 | 0.5 | 10 | 1 | 69 | 15 | 1.6 | 0.008 | 144 | 0.5 | 15 | 0.3 |
| IE3 | 100 | 5 | 4.25 | 40 | 2 | 71 | 14 | 1.4 | 0.008 | 210 | 0.7 | 13 | 0.7 |
| IE4 | 100 | 0.2 | 4.25 | 10 | 10 | 75 | 13 | 1.8 | 0.004 | 128 | 0.6 | 20 | 2.8 |
| IE5 | 100 | 5 | 0.5 | 25 | 10 | 75 | 13 | 1.4 | 0.007 | 156 | 0.8 | 20 | 2.5 |
| IE6 | 100 | 0.2 | 8 | 25 | 1 | 76 | 14 | 1.3 | 0.008 | 147 | 0.6 | 15 | 0.4 |
| IE7 | 100 | 5 | 8 | 10 | 6 | 85 | 14 | 1.3 | 0.006 | 155 | 0.7 | 17 | 1.9 |
| IE8 | 100 | 0.2 | 0.5 | 40 | 6 | 80 | 15 | 1.5 | 0.006 | 191 | 0.8 | 17 | 2.1 |
| IE9 | 100 | 2.6 | 4.25 | 25 | 6 | 83 | 14 | 1.3 | 0.004 | 142 | 0.6 | 17 | 2.0 |
| IE10 | 100 | 0.2 | 0.5 | 10 | 1 | 70 | 15 | 1.5 | 0.008 | 158 | 0.6 | 15 | 0.3 |
| IE11 | 100 | 5 | 8 | 40 | 10 | 81 | 15 | 1.4 | 0.007 | 180 | 0.8 | 18 | 2.7 |
| IE12 | 100 | 2.6 | 4.25 | 25 | 1 | 82 | 14 | 1.4 | 0.008 | 164 | 0.6 | 15 | 0.3 |
| IE13 | 100 | 2.6 | 4.25 | 25 | 10 | 83 | 13 | 1.3 | 0.005 | 159 | 0.8 | 20 | 2.4 |
| IE14 | 100 | 0.5 | 3.9 | 30 | 5 | 84 | 13 | 1.3 | 0.005 | 163 | 0.7 | 16 | 1.5 |
| IE15 | 100 | 1.3 | 3 | 14 | 5 | 84 | 13 | 1.2 | 0.005 | 138 | 0.6 | 16 | 1.4 |
| IE16 | 100 | 3.5 | 6 | 20 | 8 | 86 | 14 | 1.2 | 0.005 | 147 | 0.7 | 18 | 1.4 |

"IE" denotes "Inventive Example".

**Table 2**

| | Composition of Catalysts | X(CO) | S(CO$_2$) | S(CH$_4$) | Deact ivatio n rate (%/h) | BET (m$^2$/g) | PV (mL/g) | PD (nm) | Proportion of Ba element on surface of catalyst (%) |
|---|---|---|---|---|---|---|---|---|---|
| CE1 | 100Fe: 2.6Cu: 8K: 40SiO$_2$ | 78 | 20 | 1.4 | 0.02 | 187 | 1 | 21 | 0 |
| CE2 | 100Fe: 2.6Cu: 0.5K: 10SiO$_2$ | 65 | 16 | 1.7 | 0.03 | 150 | 0.6 | 16 | 0 |
| CE3 | 100Fe: 5Cu: 4.25K: 40SiO$_2$ | 66 | 16 | 1.5 | 0.02 | 213 | 0.8 | 15 | 0 |
| CE4 | 100Fe: 0.2Cu: 4.25K: 10SiO$_2$: 10Ca | 77 | 19 | 1.5 | 0.03 | 145 | 0.7 | 19 | 0 |
| CE5 | 100Fe: 5Cu: 0.5K: 25SiO$_2$:10Mg | 75 | 18 | 1.8 | 0.01 | 125 | 0.5 | 16 | 0 |
| CE6 | 100Fe: 0.2Cu: 8K: 25SiO$_2$:1Sr | 75 | 17 | 1.7 | 0.02 | 137 | 0.5 | 15 | 0 |
| CE7 | 100Fe: 5Cu: 8K: 10SiO$_2$:11.5Ba | 80 | 14 | 1.3 | 0.01 | 138 | 0.5 | 14 | 3.5 |

(continued)

| | Composition of Catalysts | X(CO) | S(CO$_2$) | S(CH$_4$) | Deactivation rate (%/h) | BET (m$^2$/g) | PV (mL/g) | PD (nm) | Proportion of Ba element on surface of catalyst (%) |
|---|---|---|---|---|---|---|---|---|---|
| CE8 | 100Fe: 0.2Cu: 0.5K: 40SiO$_2$:0.5Ba | 75 | 16 | 2.1 | 0.01 | 197 | 0.8 | 16 | 0.1 |
| CE9 | 100Fe: 6Cu: 5K: 2.1Ca: 1.9Ba: 20SiO$_2$ | 67 | 16 | 2.0 | 0.02 | 186 | 0.5 | 13 | 0.5 |
| CE10 | 100Fe: 5.1Cu: 2.9K: 4.3Nd: 1.5Ba: 20.7SiO$_2$ | 69 | 18 | 2.2 | 0.02 | 170 | 0.6 | 15 | 0.9 |
| CE11 | 100Fe: 5Cu: 8K: 40SiO$_2$:10Ba | 70 | 21 | 1.7 | 0.02 | 176 | 0.7 | 16 | 2.6 |
| "CE" denotes "Comparative Example". | | | | | | | | | |

As can be seen from the results in Tables 1 and 2, compared with the catalysts without adding Ba element (e.g., Comparative Examples 1 to 3), catalysts with other types of alkaline earth metal elements added (e.g., Comparative Examples 4 to 6), catalysts with excessive or insufficient Ba element added (e.g., Comparative Examples 7 and 8), and the existing catalysts dopped with two metal auxiliary agents (e.g., Comparative Examples 9 and 10), the iron-based catalyst for Fischer-Tropsch synthesis provided by the present invention exhibits a higher CO conversion rate as well as lower selectivity toward CO$_2$ and CH$_4$, demonstrating its excellent catalytic activity. Additionally, the iron-based catalyst for Fischer-Tropsch synthesis provided by the present invention also shows a lower deactivation rate, indicating that it has good thermal stability, which is particularly crucial for highly exothermic Fischer-Tropsch synthesis reactions under high catalytic activity conditions.

In addition, it can be seen from the Comparative Example 11 that if the Ba element on the surface of a catalyst does not exist in the form of barium carbonate, the selectivity toward CO$_2$ will increase significantly and the stability of the catalyst will also decrease markedly.

Unless otherwise limited, the terms used in the present invention shall have the meanings commonly understood by those skilled in the art.

The embodiments described in the present invention are merely for illustrative purposes and are not intended to limit the scope of protection of the present invention. Those skilled in the art may make various other substitutions, changes, and improvements within the scope of the present invention. Therefore, the present invention is not limited to the aforementioned embodiments and is only limited by the appended claims.

**Claims**

1. An iron-based catalyst for Fischer-Tropsch synthesis, comprising Fe, Cu, K and SiO$_2$, wherein the surface of the iron-based catalyst contains 0.3 mol% to 3 mol% of Ba.

2. The iron-based catalyst for Fischer-Tropsch synthesis according to claim 1, wherein:

   the Ba on the surface of the iron-based catalyst is present in the form of barium carbonate; and/or
   the iron-based catalyst has a specific surface area of 100 to 250 m$^2$/g.

3. The iron-based catalyst for Fischer-Tropsch synthesis according to claim 1 or 2, wherein:
   the iron-based catalyst comprises the following components in a mass ratio: Fe : Cu : K : Ba : SiO$_2$ = 100 : 0.2~5 : 0.5~8 : 1~10 : 10~40.

4. A method for preparing the iron-based catalyst for Fischer-Tropsch synthesis according to any one of claims 1 to 3, comprising the following steps:

S1: forming an aqueous mixed solution of a water-soluble iron salt and a water-soluble copper salt, simultaneously preparing a precipitant solution, and adding 0 wt% to 100 wt% of a silicon source to the precipitant solution;

S2: bringing the aqueous mixed solution into contact with the precipitant solution to carry out precipitation reaction, and separating resulting precipitate after completion of the reaction;

S3: mixing the precipitate with an aqueous solution of a potassium auxiliary agent precursor and the remaining silicon source to form a mixed slurry, and subjecting the mixed slurry to slurrying treatment to obtain a slurry of catalyst precursor; and

S4: drying and calcining the slurry of catalyst precursor;

wherein, Ba is added in the following manners:

adding a water-soluble barium salt to the aqueous mixed solution in step S1, with the Ba concentration being less than 2.0 g Ba/100 g water; or

formulating a water-soluble barium salt into an aqueous solution with a concentration of lower than 2.0 g Ba/100 g water, then adding the resulting aqueous solution to the mixed slurry in step S3.

5. The method according to claim 4, wherein:

the water-soluble iron salt is selected from iron nitrates, iron chlorides, and their respective hydrates, and the water-soluble copper salt is selected from copper nitrates, copper chlorides, and their respective hydrates; preferably, the concentration of Fe in the aqueous mixed aqueous solution is 5 to 100 g/L; and/or

the precipitant is one or more selected from sodium carbonate, aqueous ammonia, ammonium carbonate, sodium hydroxide, potassium hydroxide, and potassium carbonate; preferably, the precipitant has a concentration of 50 to 150 g/L.

6. The method according to claim 4 or 5, wherein:

the silicon source is one or more selected from potassium silicate solution, sodium silicate solution, and silica sol solution, with the concentration of $SiO_2$ being 10 wt% to 50 wt%; and/or

the water-soluble barium salt is one or both of barium nitrate and barium hydroxide; and/or

the potassium auxiliary agent precursor is one or more of potassium nitrate, potassium carbonate, potassium bicarbonate, potassium silicate, and potassium chloride.

7. The method according to any one of claims 4 to 6, wherein,

in step S2, the precipitation reaction is carried out at a temperature of 5 to 95°C for 5 to 100 minutes, with the pH value controlled at 5 to 10 during precipitation; and/or

in step S3, the slurrying treatment is carried out at 10 to 80°C for 10 to 80 minutes, with the slurry concentration controlled at a concentration of 10 wt% to 20 wt% during slurrying treatment.

8. The method according to any one of claims 4 to 7, wherein:

step S3 further comprises: after completion of the slurrying treatment, introducing $CO_2$ gas for a treatment duration of 0 to 180 minutes, preferably introducing $CO_2$ gas for a treatment duration of 30 to 180 minutes.

9. The method according to any one of claims 4 to 8, wherein:

in step S4, the drying is carried out as follows: first, the slurry of the catalyst precursor is subjected to spray drying, and the resulting powder is then dried in an air atmosphere at 110 to 300°C for 1 to 12 hours;

preferably, the spray drying is performed with a hot air inlet temperature of 180 to 400°C, and an exhaust air outlet temperature of 100 to 220°C.

10. The method according to any one of claims 4 to 9, wherein:

in step S4, the calcining is carried out at 400 to 600°C for 1 to 15 hours.

FIG. 1

Electronic image

250nm                                    250nm

FIG. 2

## INTERNATIONAL SEARCH REPORT

| International application No. |
| --- |
| **PCT/CN2023/133691** |

**A. CLASSIFICATION OF SUBJECT MATTER**

B01J23/78(2006.01)i

According to International Patent Classification (IPC) or to both national classification and IPC

**B. FIELDS SEARCHED**

Minimum documentation searched (classification system followed by classification symbols)

B01J

Documentation searched other than minimum documentation to the extent that such documents are included in the fields searched

Electronic data base consulted during the international search (name of data base and, where practicable, search terms used)

CNTXT, VEN, CJFD: 费托合成, 催化剂, 铁, 铜, 钾, 二氧化硅, 钡, FT synthesis, catalyst, Fe, iron, Cu, copper, K, SiO2, Ba

**C. DOCUMENTS CONSIDERED TO BE RELEVANT**

| Category* | Citation of document, with indication, where appropriate, of the relevant passages | Relevant to claim No. |
| --- | --- | --- |
| A | CN 111774060 A (CHINA ENERGY INVESTMENT CORP., LTD. et al.) 16 October 2020 (2020-10-16) description, paragraphs 6-18 | 1-10 |
| PX | CN 116637623 A (CHINA ENERGY INVESTMENT CORP., LTD. et al.) 25 August 2023 (2023-08-25) claims 1-10 | 1-10 |
| A | CN 107376922 A (SHENHUA GROUP CORP., LTD. et al.) 24 November 2017 (2017-11-24) entire document | 1-10 |
| A | JP H10277392 A (KANSAI ELECTRIC POWER CO., INC. et al.) 20 October 1998 (1998-10-20) entire document | 1-10 |
| A | 吕毅军等 (LYU, Yijun et al.). "沉淀铁基催化剂助剂对费托反应性能影响的研究 (A Study on the Influence of Precipitated Iron-based Catalyst for Fischer-Tropsch Reaction Performance)" 神华科技 (Shenhua Science and Technology), No. 02, 25 April 2009 (2009-04-25), entire document | 1-10 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 February 2024** | **19 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 703 036 A1

## INTERNATIONAL SEARCH REPORT
**Information on patent family members**

International application No.

**PCT/CN2023/133691**

| Patent document cited in search report | | | Publication date (day/month/year) | Patent family member(s) | | | Publication date (day/month/year) |
|---|---|---|---|---|---|---|---|
| CN | 111774060 | A | 16 October 2020 | None | | | |
| CN | 116637623 | A | 25 August 2023 | None | | | |
| CN | 107376922 | A | 24 November 2017 | None | | | |
| JP | H10277392 | A | 20 October 1998 | JP | 3943648 | B2 | 11 July 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1245255 C
- CN 101293206 A
- CN 101298046 A
- CN 107684910 B
- CN 107913714 B